# EUROPÄISCHE PATENTSCHRIFT

(11) **EP 0 861 577 B1**
(45) Veröffentlichungstag und Bekanntmachung des Hinweises auf die Patenterteilung: **02.01.2003**
(21) Anmeldenummer: 98101716.3
(22) Anmeldetag: 02.02.1998
(51) Int. Cl.: A01B 29/04

(54) **Bodenwalze**
Soil roller
Rouleau pour sol

(30) Priorität: 21.02.1997 DE 19707004
(43) Veröffentlichungstag der Anmeldung: 02.09.1998
(73) Patentinhaber: Amazonen-Werke H. Dreyer GmbH & Co. KG, 49205 Hasbergen (DE)
(72) Erfinder: Reinke, Wilfried, 26123 Oldenburg (DE)
(74) Vertreter: Grünecker, Kinkeldey, Stockmair & Schwanhäusser Anwaltssozietät

(56) Entgegenhaltungen:
- EP-A- 0 245 648
- EP-A- 0 367 992
- EP-A- 0 682 854
- FR-A- 2 694 863
- FR-A- 2 730 599

## Beschreibung

Die Erfindung betrifft eine Bodenwalze gemäß dem Oberbegriff des Anspruchs 1.

Eine derartige Bodenwalze ist aus der EP 0682 854 A1 bekannt. Dort werden die Bodenverdichtungsringe mit Hilfe von Abstandselementen an einem Tragrohr festgelegt, indem diese zunächst in Aussparungen der Bodenverdichtungsringe eingreifen und dann unter Verringerung ihres Durchmessers verschraubt werden, um so die Bodenverdichtungsringe über den Auflagebereich der Abstandselemente am Tragrohr festzulegen.

Aus der DE-OS 3902757 ist eine Bodenwalze bekannt, bei der auf einem Tragrohr in Abständen zueinander umlaufende Bodenverdichtungsringe aufgeschoben sind. Diese Bodenverdichtungsringe bestehen aus einem elastischen Material. Hierdurch wird eine sehr gute Selbstreinigung der Bodenverdichtungsringe erreicht.

Der Erfindung liegt die Aufgabe zugrunde, eine unverrückbare Befestigung der Bodenverdichtungsringe auf dem Tragrohr in einfachster Weise zu erreichen und zu gewährleisten.

Diese Aufgabe wird erfindungsgemäß durch die kennzeichnenden Merkmale des Anspruchs 1 gelöst. Die schwalbenschwanzförmige Form der Bodenverdichtungsringe im Auflagebereich führt zunächst dazu, dass die Ringe formschlüssig durch die Abstandselemente in ihrer Position gehalten werden. Die Kombination der relativ druckfesten Abstandselemente mit dem relativ weichen Material der Bodenverdichtungsringe im Bereich des schwalbenschwanzförmigen Bereiches führt weiter dazu, dass der jeweilige Ring im Auflagebereich in dem Moment sich auf dem Tragrohr verklemmt, in dem eine axiale Spannung auf die Bodenverdichtungsringe und die Abstandselemente aufgebracht wird. Durch diese Maßnahme verschieben sich die Bodenverdichtungsringe auch beim Auftreten von hohen Seitenkräften nicht auf dem Walzenrohr, obwohl zum leichten Aufschieben ausreichend Abstand zwischen dem Walzenrohr einerseits und den Abstandselementen sowie Bodenverdichtungsringen andererseits vorhanden ist.

Die schwalbenschwanzförmige Form lässt sich in einfacher Weise durch das Merkmal des Anspruchs 3 verwirklichen.

Ein leichtes Aufschieben der Bodenverdichtungsringe auf dem Tragrohr läßt sich dadurch erreichen, daß der Innendurchmesser der Ringe im unverpreßten Zustand um 1 bis 5mm größer ist als der Außendurchmesser des Tragrohres. Hierdurch ergibt sich ein ausreichend großer Abstand zwischen Tragrohr und den auf diesem aufzuschiebenden Teilen.

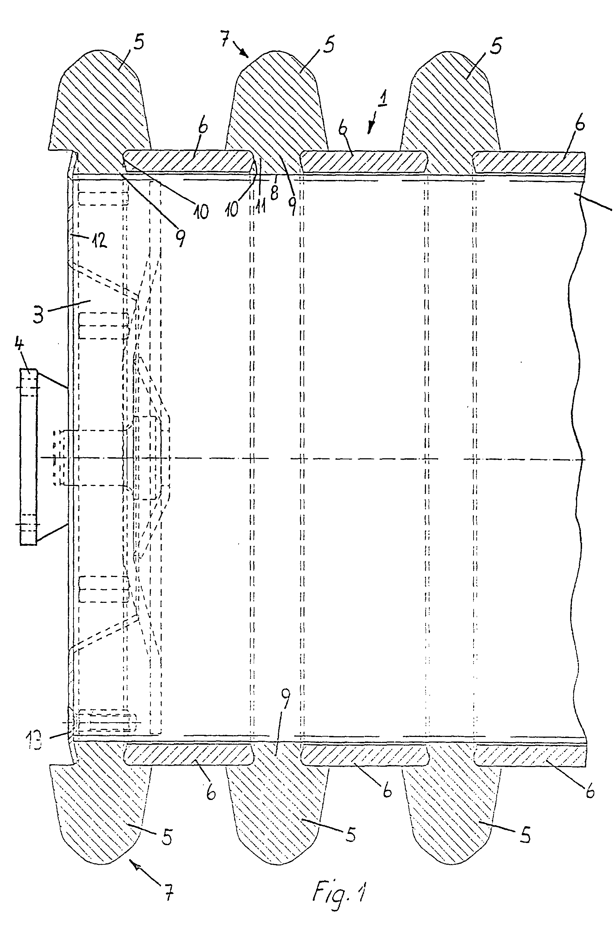

Weitere Einzelheiten der Erfindung sind den übrigen Unteransprüchen, der Beispielsbeschreibung und den Zeichnungen zu entnehmen. Hierbei zeigen
- Fig.1: die Bodenwalze in Teilansicht und im Schnitt nach dem axialen Verspannen der Bodenverdichtungsringe und der Abstandselemente,

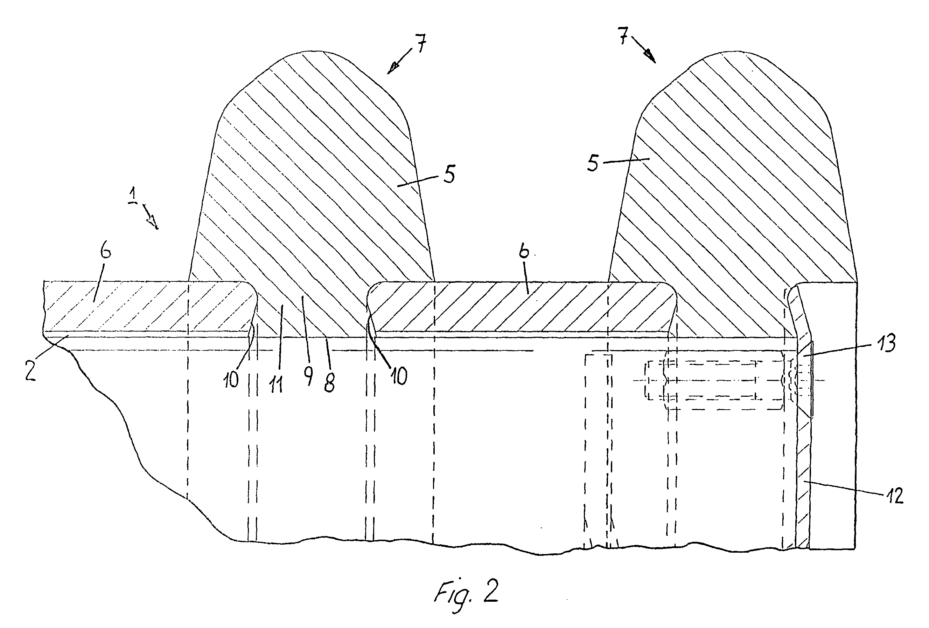

- Fig.2: die Bodenwalze in Teilansicht und im Schnitt nach dem Verspannen in vergrößertem Maßstab und
- Fig.3: die Bodenwalze in Teilansicht im Schnitt und im vergrößerten Maßstab vor dem Verspannen.

Die Bodenwalze 1 besteht aus dem Tragrohr 2. Am Ende 3 des Tragrohres 2 sind im Innenbereich die Lagerelemente 4 angeordnet, mittels denen die Walze an einem nicht dargestelltem Traggestell drehbar zu lagern ist.

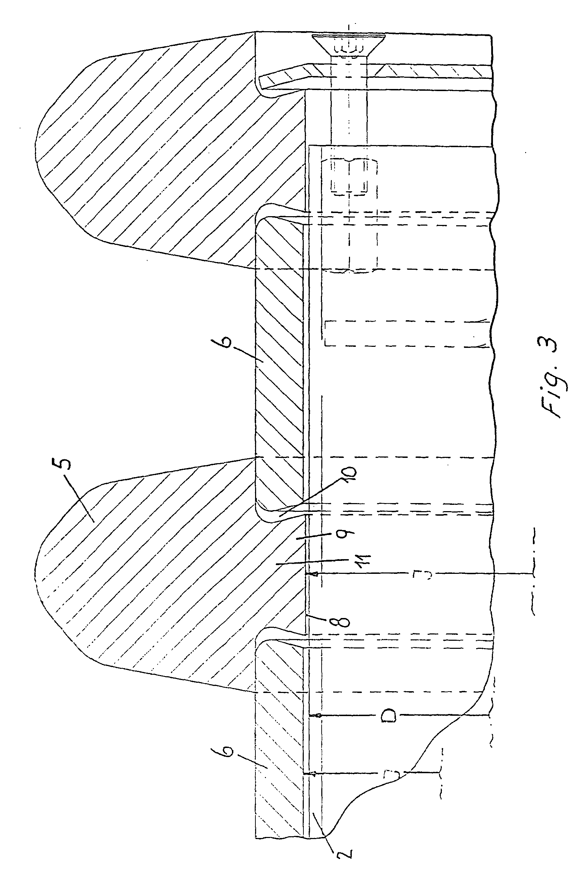

Die Bodenwalze 1 ist als Keilringwalze ausgebildet. Hierzu werden auf das Tragrohr 2 abwechselnd die Bodenverdichtungsringe 5 und die Abstandselemente 6 aufgeschoben. Die Abstandselemente 6 und die Bodenverdichtungsringe 5 weisen im unverpreßten Zustand weisen einen Innendurchmesser I auf, der um 1 bis 5mm größer ist als der Außendurchmesser D des Tragrohres 2, wie Fig.3 zeigt. Hierdurch lassen sich die Abstandselemente 6 und die Bodenverdichtungsringe 5 leicht aufschieben. Die Bodenverdichtungsringe 5 weisen in ihren äußeren Umfangsbereich 7 eine keilförmige Form auf. In ihren Auflagebereich 8 weisen die Bodenverdichtungsringe 5 eine im Querschnitt gesehen schwalbenschwanzförmige Form 9 auf. Diese schwalbenschwanzförmige Form 9 ist durch Ausschnitte 10 in dem Fußbereich 11 des Ringes 5 gebildet. Die Bodenverdichtungsringe 5 bestehen entweder aus Gummi oder aus einem elastischen Kunststoffmaterial. Die Abstandselemente 6 sind aus einem wesentlich steiferen Material als die Bodenverdichtungsringe 5 hergestellt, damit sie sich beim axialen Verspannen nicht verformen.

Die Abstandselemente 6 greifen, wie die Zeichnungen zeigen, in die Ausschnitte 10 des Fußbereiches 11 des Ringes 5 der schwalbenschwanzförmigen Form 9 ein und bilden hiermit einen Formschluß.

Wenn die Bodenverdichtungsringe 5 und die Abstandselemente 6 abwechselnd in der gewünschten Anzahl auf das Tragrohr 2 aufgeschoben sind, werden diese seitlich durch die Abschlußplatte 12 durch Verspannen gegeneinander gepreßt. Dieses geschieht durch die Zugelemente 13, die als Schrauben ausgebildet sind. Durch das Verpressen der Abstandselemente 6 und der Bodenringe 5 gegeneinander werden die Bodenverdichtungsringe 5 auf dem Tragrohr 2 festgesetzt. Dieses geschieht dadurch, daß die Abstandselemente 6 gegen den schwalbenschwanzförmigen Bereich 9 der Bodenverdichtungsringe 5 derart preßbar sind, daß die dem Tragrohr 2 zugewandte Seite des Auflagebereiches des Bodenverdichtungsringes 5 gegen das Tragrohr 2 gedrückt wird, wie dieses Fig.3 zeigt. Somit verklemmen sich die Bodenverdichtungsringe 5 auf dem Tragrohr 2.

Der Abstand der Bodenverdichtungsringe 5 zueinander wird durch die Breite der Abstandselemente 6 bestimmt. Die Abstandselemente 6 weisen einen kleineren Außendurchmesser als die Bodenverdichtungsringe 5 auf.

## Patentansprüche

1. Bodenwalze mit einem zentralen Tragrohr (2), auf dem in Abständen zueinander umlaufende Bodenverdichtungsringe (5) angeordnet sind, die aus einem elastischen Material bestehen und in ihrem Auflagebereich (8) auf dem Tragrohr (2) eine im Querschnitt schwalbenschwanzförmige Form (9) aufweisen und zwischen denen jeweils einen kleineren Außendurchmesser als die Bodenverdichtungsringe aufweisende Abstandselemente angeordnet sind,
**dadurch gekennzeichnet, dass**
die Abstandselemente axial gegen den schwalbenschwanzförmigen Bereich der Bodenverdichtungsringe gepresst sind und zwar derart, dass die dem Tragrohr (2) zugewandte Seite des Auflagebereichs der Bodenverdichtungsringe gegen das Tragrohr gedrückt wird.

2. Bodenwalze nach Anspruch 1, **dadurch gekennzeichnet, daß** die Abstandselemente (6) aus einem steiferen Material als die Bodenverdichtungsringe (5) bestehen.

3. Bodenwalze nach einem oder mehreren der vorstehenden Ansprüche, **dadurch gekennzeichnet, daß** die schwalbenschwanzförmige Form (9) durch Ausschnitte (10) in dem Fußbereich (11) des Ringes (5) gebildet wird.

4. Bodenwalze nach einem oder mehreren der vorstehenden Ansprüche, **dadurch gekennzeichnet, daß** der Abstand der Ringe (5) durch die Breite der Abstandselemente (6) bestimmt wird.

5. Bodenwalze nach einem oder mehreren der vorstehenden Ansprüche, **dadurch gekennzeichnet, daß** die Bodenverdichtungsringe (5) aus Gummi hergestellt sind.

6. Bodenwalze nach einem oder mehreren der vorstehenden Ansprüche, **dadurch gekennzeichnet, daß** die Bodenverdichtungsringe (5) aus einem elastisch verformbaren Kunststoffmaterial hergestellt sind.

7. Bodenwalze nach Anspruch 1, **dadurch gekennzeichnet, daß** der Innendurchmesser (I) der Ringe (5) im unverpreßten Zustand um 1 bis 5 mm größer ist, als der Außendurchmesser (D) des Tragrohres (2).

## Claims

1. Ground roller having a central supporting tube (2), on which circular ground compacting rings (5) are disposed spaced one from the other, which rings are formed from a resilient material and have in their contact region (8) on the supporting tube (2) a shape (9), which is dovetailed in cross-section, and between each of which rings are disposed spacer members, which have a smaller outer diameter than the ground compacting rings,
**characterised in that**
the spacer members are forced in an axial manner against the dovetailed region of the ground compacting rings such that the side of the bearing region of the ground compacting rings facing the supporting tube (2) is pressed against the supporting tube.

2. Ground roller according to claim 1, **characterised in that** the spacer members (6) are produced from a material which is stiffer than the ground compacting rings (5).

3. Ground roller according to one or more of the preceding claims, **characterised in that** the dovetailed shape (9) is formed through cut-outs (10) in the base region (11) of the ring (5).

4. Ground roller according to one or more of the preceding claims, **characterised in that** the spacing between the rings (5) is determined by the width of the spacer members (6).

5. Ground roller according to one or more of the preceding claims, **characterised in that** the ground compacting rings (5) are produced from rubber.

6. Ground roller according to one or more of the preceding claims, **characterised in that** the ground compacting rings (5) are produced from a plastics material that is elastically deformable.

7. Ground roller according to claim 1, **characterised in that** the internal diameter (I) of the rings (5) in the non-compressed state is greater by 1 to 5 mm than the external diameter (D) of the supporting tube (2).

## Revendications

1. Rouleau compresseur avec un tube de support (2) central sur lequel sont placés des anneaux de compactage du sol (5) circulaires, écartés les uns des autres, qui sont en un matériau élastique et qui dans leur zone d'appui (8) sur le tube de support (2) présentent en coupe transversale un profil (9) en queue d'aronde et entre lesquels sont à chaque fois placés des éléments d'écartement présentant un diamètre extérieur plus petit que les anneaux de compactage du sol,
**caractérisé en ce que**
les éléments d'écartement sont pressés axialement contre la zone en queue d'aronde des anneaux de compactage du sol et de telle manière que le côté, orienté vers le tube de support (2), de la zone d'appui des anneaux de compactage du sol est pressé contre le tube de support.

2. Rouleau compresseur selon la revendication 1,
**caractérisé en ce que**
les éléments d'écartement (6) sont en un matériau plus rigide que les anneaux de compactage du sol (5).

3. Rouleau compresseur selon une ou plusieurs des revendications précédentes,
**caractérisé en ce que**
le profil (9) en queue d'aronde est formé par des encoches (10) dans la zone de base (11) de l'anneau (5).

4. Rouleau compresseur selon une ou plusieurs des revendications précédentes,
**caractérisé en ce que**
l'écart des anneaux (5) est déterminé par la largeur des éléments d'écartement (6).

5. Rouleau compresseur selon une ou plusieurs des revendications précédentes,
**caractérisé en ce que**
les anneaux de compactage du sol (5) sont fabriqués en caoutchouc.

6. Rouleau compresseur selon une ou plusieurs des revendications précédentes,
**caractérisé en ce que**
les anneaux de compactage du sol (5) sont fabriqués en un matériau synthétique élastiquement déformable.

7. Rouleau compresseur selon la revendication 1,
**caractérisé en ce que**
le diamètre intérieur (I) des anneaux (5) en état non pressé est de 1 à 5 mm plus grand que le diamètre extérieur (D) du tube de support (2).
